(19) **Europäisches Patentamt**
**European Patent Office**
**Office européen des brevets**

(11) **EP 2 666 238 B1**

(12) **EUROPÄISCHE PATENTSCHRIFT**

(45) Veröffentlichungstag und Bekanntmachung des Hinweises auf die Patenterteilung:
**11.09.2019  Patentblatt 2019/37**

(51) Int Cl.:
*H02P 6/18* (2016.01)    *H02P 21/18* (2016.01)
*H02P 23/18* (2016.01)

(21) Anmeldenummer: **12709273.2**

(22) Anmeldetag: **16.01.2012**

(86) Internationale Anmeldenummer:
**PCT/DE2012/100009**

(87) Internationale Veröffentlichungsnummer:
**WO 2012/097807 (26.07.2012 Gazette 2012/30)**

(54) **VERFAHREN ZUR BESTIMMUNG DER POSITION DES LÄUFERS EINER ELEKTRISCHEN MASCHINE**

METHOD FOR DETERMINING THE POSITION OF THE ROTOR OF AN ELECTRIC MACHINE

PROCÉDÉ DE DÉTERMINATION DE LA POSITION DU ROTOR D'UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.01.2011  DE 102011008756**

(43) Veröffentlichungstag der Anmeldung:
**27.11.2013  Patentblatt 2013/48**

(73) Patentinhaber: **Strothmann, Rolf**
**66740 Saarlouis (DE)**

(72) Erfinder: **Strothmann, Rolf**
**66740 Saarlouis (DE)**

(74) Vertreter: **Bernhardt, Reinhold**
**Patentanwälte Bernhardt/Wolff**
**Partnerschaft mbB**
**Europaallee 17**
**66113 Saarbrücken (DE)**

(56) Entgegenhaltungen:
**EP-A1- 1 901 421        EP-A2- 2 160 831**
**WO-A1-2010/000640    DE-A1-102006 020 676**
**DE-A1-102008 027 720    US-A1- 2009 261 765**

• **KAN AKATSU ET AL: "Sensorless Very Low-Speed and Zero-Speed Estimations with Online Rotor Resistance Estimation of Induction Motor Without Signal Injection", IEEE TRANSACTIONS ON INDUSTRY APPLICATIONS, IEEE SERVICE CENTER, PISCATAWAY, NJ, US, vol. 36, no. 3, 1 May 2000 (2000-05-01), XP011022754, ISSN: 0093-9994**

EP 2 666 238 B1

**Beschreibung**

Die Erfindung betrifft ein Verfahren zur Bestimmung der Position des Läufers einer mehrere Phasenstränge aufweisenden elektrischen Maschine in Bezug auf den Stator sowie eine Vorrichtung zur Durchführung des Verfahrens.

Aus der EP 1 005 716 B1 ist ein Verfahren zur Bestimmung der Position des Läufers einer elektrischen Maschine bekannt, bei dem durch Potentialänderungen an den Bestromungseingängen bewirkte Änderungen des Potentials am Sternpunkt zur Bestimmung eines für die Läuferposition repräsentativen Signals genutzt werden.

Aus der WO 2010/000640 A1 geht ein Verfahren zur Bestimmung der Rotorposition einer elektrischen Maschine hervor, bei dem im Stillstand des Rotors an die Bestromungseingänge der elektrischen Maschine aufeinanderfolgend Spannungsvektoren mit entgegengesetzten Richtungen angelegt und danach die sich daraufhin entwickelnden Ströme gemessen werden, aus welchen dann die Rotorposition ableitbar ist. Ein ähnliches Verfahren geht aus EP 1 901 401 A1 hervor.

Der Erfindung liegt die Aufgabe zugrunde, ein neues Verfahren zur Bestimmung der Position des Läufers einer elektrischen Maschine zu schaffen, das ohne Abgriff einer elektrischen Größe innerhalb der elektrischen Maschine auskommt.

Das diese Aufgabe lösende Verfahren nach Anspruch 1 der Erfindung ist dadurch gekennzeichnet, für zumindest einen der Bestromungseingänge der elektrischen Maschine eine Änderung der Zeitableitung der durch den betreffenden Bestromungseingang fließenden Stromes ermittelt wird, wobei die Änderung der Zeitableitung durch einen Wechsel des Schaltzustandes einer Beschaltung der Bestromungseingänge mit einer Gleichspannung und/oder dem Spannungsnullpunkt verursacht ist, und dass aus mehreren, nacheinander für den zumindest einen Bestromungseingang oder gleichzeitig für mehrere der Bestromungseingänge ermittelte Änderungen ein für die Position des Läufers repräsentatives Signal anhand die Summen der Spannungskomponenten über den einzelnen Phasensträngen vor und nach dem Schaltzustandswechsel enthaltenden Gleichungen ermittelt wird.

Die Bestimmung der Position des Läufers erfolgt erfindungsgemäß allein anhand außerhalb der elektrischen Maschine messbarer Ströme und veränderbarer Spannungen.

Vorzugsweise wird als repräsentatives Messsignal die momentane Induktivität eines oder mehrerer der Phasenstränge oder/und ein Quotient aus diesen Induktivitäten bestimmt.

Die Phasenstränge können im Stern oder/und Dreieck verschaltet sein.

In einer besonders bevorzugten Ausführungsform erfolgt die Änderung ΔU des Schaltzustands im Rahmen einer Bestromung der elektrischen Maschine durch Pulsweitenmodulation (PWM). Die Positionsbestimmung erfordert dann weder einen Eingriff in die elektrische Maschine selbst noch deren Betriebsweise.

Die Änderung Δİ lässt sich z.B. mit Hilfe eines Messtransformators ermitteln, der ein ggf. zu verstärkendes Spannungssignal liefert. Bei einer z.B. im Rahmen der Pulsweitenmodulation erfolgenden Spannungsumschaltung ergibt sich ein dem Spannungssprung bei der Umschaltung entsprechender Sprung an der Sekundärwicklung des Messtransformators.

Gemäß der Erfindung wird das repräsentative Messsignal aus Gleichungen ermittelt, die die Summe der Spannungskomponenten über den einzelnen Phasensträngen vor und nach der Spannungsänderung enthalten.

Die Erfindung wird im Folgenden anhand von Ausführungsbeispielen und der beiliegenden, sich auf diese Ausführungsbeispiele beziehenden Zeichnungen weiter erläutert. Es zeigen:

Fig. 1    eine schematische Darstellung einer elektrischer Maschine mit im Stern verschalteten Phasensträngen und Einrichtungen zur Bestimmung der Position des Läufers nach dem erfindungsgemäßen Verfahren,

Fig. 2    eine Messeinrichtung zur Bestimmung von Änderungen Δİ der Zeitableitung İ des Stromes İ in einem Phasen-strang, und

Fig. 3    eine schematische Darstellung einer elektrische Maschine mit im Dreieck verschalteten Phasensträngen und Einrichtungen zur Bestimmung der Position des Läufers nach dem erfindungsgemäßen Verfahren.

Drei im Stern verschaltete Phasenstränge 1,2,3 einer elektrischen Maschine 4 bilden je einen induktiven Widerstand 5 und einen ohmschen Widerstand 6. Die dem Sternpunkt 7 abgewandten Enden der Phasenstränge 1,2,3 sind mit Anschlüssen 1',2',3' für Stromversorgungsleitungen 1 ",2",3" verbunden.

Eine Bestromungseinrichtung 8 verbindet die Bestromungsleitungen 1 ",2",3" über Schalteinrichtungen 9 bis 11 entsprechend dem Pulsweitenmodulationsverfahren (PWM-Verfahren) mit der Gleichspannung U_B einer Batterie 12 oder dem Spannungsnullpunkt.

Messeinrichtungen 13 bis 15 in den Bestromungsleitungen 1",2",3" dienen der Bestimmung von Änderungen Δİ, d.h. Änderungen der ersten Ableitung des durch die jeweilige Bestromungsleitung fließenden Stromes I nach der Zeit. Hierbei geht es um kurzfristige Änderungen, die sich als Folge von Umschaltungen durch die Schalteinrichtungen 9 bis 11 ergeben.

Die Messeinrichtungen 13 bis 15 stehen in Verbindung mit einer Auswerteinrichtung 16, die ihrerseits über eine Steuerleitung 17 mit der Bestromungseinrichtung 8 verbunden ist.

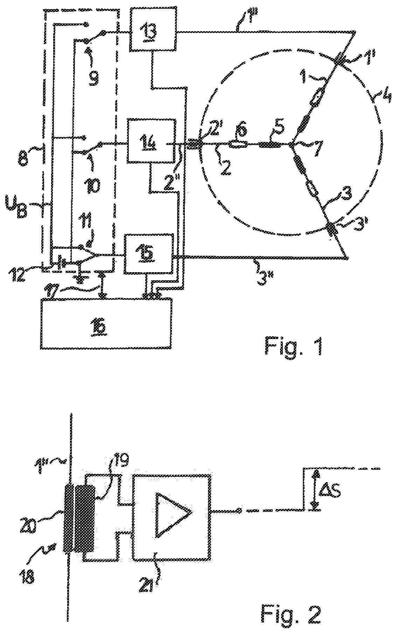

Wie Fig. 2 zeigt, können die Messeinrichtungen 13,14,15 z.B. einen Messtransformator 18 aufweisen, dessen Sekundärwicklung 19 ein Spannungssignal liefert, das ein Maß für $\dot{I}$, d.h. die erste Ableitung des Stromes I nach der Zeit, ist. Ein Verstärker 21 sorgt dafür, dass die Induktivität der Primärwicklung 20 klein im Vergleich zur Induktivität der Phasenstränge 1,2,3 sein kann.

Für die über den einzelnen Phasensträngen i (i = 1,2,3) liegenden Spannungen $U_i$ gilt zu jedem Zeitpunkt:

$$U_i = U_{i\,ind} + L_i\dot{I}_i + R_iI_i \tag{1},$$

worin $U_{i\,ind}$ die im Phasenstrang i induzierte Spannung, $L_i$ die Induktivität des Phasenstrangs i und $R_i$ dessen ohmschen Widerstand bezeichnen.

Je nachdem, ob die Batteriespannung $U_B$ oder der Spannungsnullpunkt am Phasenstrang i anliegt, beträgt $U_i$ = 0, $U_i$ = Us, $U_i = U_B - U_S$ oder $U_i = U_S - U_B$, wobei $U_S$ das Potential am Sternpunkt 7 bedeutet.

Geht man beispielsweise von einem Schaltzustand aus, in dem alle drei Phasenstränge 1,2,3 mit dem Spannungsnullpunkt verbunden sind, so gilt:

$$0 = U_{1\,ind} + L_1\dot{I}_1 + R_1I_1 \tag{2}$$

$$0 = U_{2\,ind} + L_2\dot{I}_2 + R_2I_2 \tag{3}$$

$$0 = U_{3\,ind} + L_3\dot{I}_3 + R_3I_3 \tag{4}.$$

Die ohmschen Widerstände $R_i$ können als einander gleich und im Motorbetrieb der elektrischen Maschine als konstant angesehen werden. Die Induktivitäten $L_i$ hängen dagegen vom jeweiligen Einfluss des Erregerfeldes und damit von der Position des Läufers auf die Magnetisierungen der Polwicklungskerne ab. Innerhalb einer halben magnetischen Periode besteht jeweils ein eindeutiger Zusammenhang zwischen der Induktivität der Phasenstränge und der Position des Läufers, der sich zur Positionsbestimmung nutzen lässt, wie nachfolgend erläutert wird.

Nach Umschaltung z.B. des Phasenstrangs 3 auf die Batteriespannung $U_B$ durch die Schalteinrichtung 11 ergibt sich:

$$U_S = U_{1\,ind}' + L_1\dot{I}_1' + R_1I_1' \tag{5}$$

$$U_S = U_{2\,ind}' + L_2\dot{I}_2' + R_2I_2' \tag{6}$$

$$U_B - U_S = U_{3\,ind}' + L_3\dot{I}_3' + R_3I_3' \tag{7}.$$

Der Wechsel des durch die Gleichungen (2) bis (4) charakterisierten Schaltzustands in den Schaltzustand gemäß den Gleichungen (5) bis (7) vollzieht sich so schnell, dass sich weder die in den Phasensträngen induzierten Spannungen $U_{1\,ind}$ noch die dort fließenden Ströme $I_i$ nennenswert ändern, so dass gilt: $U_{i\,ind} = U_{i\,ind}'$ und $R_i I_i + R_i I_i'$. Auswirkungen hat die Umschaltung im Wesentlichen nur auf $\dot{I}_i$, die erste Ableitung der Ströme nach der Zeit. Durch Subtraktion von (2) - (5), (3) - (6) und (4) - (7) erhält man daher:

$$L_1\,(\dot{I}_1 - \dot{I}_1') = L_1 \cdot \Delta\dot{I}_1 = U_S \tag{8}$$

$$L_2\,(\dot{I}_2 - \dot{I}_2') = L_2 \cdot \Delta\dot{I}_2 = U_S \tag{9}$$

$$L_3\,(\dot{I}_3 - \dot{I}_3') = L_3 \cdot \Delta\dot{I}_3 = U_B - U_S \tag{10}.$$

Die Größen $\Delta\dot{I}_1$, $\Delta\dot{I}_2$ und $\Delta\dot{I}_3$ lassen sich mit Hilfe der Messeinrichtungen 13 bis 15 bestimmen. In den drei Gleichungen (8) bis (10) sind dann die Induktivitäten $L_1, L_2$ und $L_3$ sowie das Potential $U_S$ am Sternpunkt unbekannt.

Aus den drei Gleichungen (8) bis (10) lassen sich unter Eliminierung von $U_S$ die Verhältnisse $L_1/L_2$, $L_1/L_3$ und $L_2/L_3$ bestimmen, die jeweils ein Maß für die Position des Läufers innerhalb einer halben magnetischen Periode darstellen.

Für den oben beschriebenen Wechsel des Schaltzustands gilt ferner:

$$U_B = (L_3 + 1/(1/L_1+1/L_2))\cdot\Delta\dot{I}_3 \qquad (11).$$

Somit stehen vier Gleichungen (8) bis (14) zur Bestimmung der Unbekannten $L_1, L_2, L_3$ und $U_S$ zur Verfügung. Jede der Induktivitäten $L_1, L_2, L_3$ kann als Maß für die Position des Läufers innerhalb einer halben magnetischen Periode dienen.

Es versteht sich, dass zur Gewinnung mehrerer Gleichungen, aus denen $U_S$ eliminiert und $L_1, L_2$ oder/und $L_3$ bestimmt werden kann, mehrere aufeinanderfolgende Schaltzustandswechsel betrachtet werden können, solange die Bedingung eingehalten wird, dass sich über die Gesamtdauer der Messungen die Position des Läufers nicht merklich ändert. Unter diesen Bedingungen braucht $\Delta\dot{I}$ nicht in allen drei Phasensträngen bestimmt zu werden. Bei Betrachtung mehrerer Schaltzustandswechsel kann die Messung von $\Delta\dot{I}$ in einem einzigen Phasenstrang genügen. Entsprechend bedarf es nur einer einzigen Messeinrichtung.

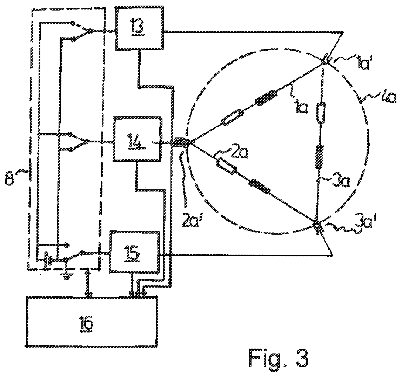

Gleichungen zur Bestimmung von $L_1, L_2$ oder/und $L_3$ lassen sich auch für den Fall aufstellen, dass die Phasenstränge 1,2,3 im Dreieck verschaltet sind, wie dies in Fig. 3 dargestellt ist.

Ein erster Schaltzustandswechsel betrifft z.B. die Umschaltung des Anschlusses 1a' vom Spannungsnullpunkt auf Batteriespannung $U_B$. Ein zweiter Schaltzustandswechsel die Umschaltung des Anschlusses 2a' vom Spannungsnullpunkt auf die Batteriespannung $U_B$. Hieraus ergeben sich drei Gleichungen

$$\Delta\dot{I}_2\cdot L_1 = U_B \qquad (12)$$

$$\Delta\dot{I}_3\cdot L_3 = U_B \qquad (13)$$

$$\Delta\dot{I}_3{}'\cdot L_2 = U_B \qquad (14),$$

aus denen sich die Unbekannten $L_1, L_2, L_3$ ermitteln lassen.

Die Messeinrichtungen 13 bis 15 in der Ausführungsform gemäß Fig. 2 ermitteln oder wenigstens eine solche Messeinrichtung ermittelt ein für die Zeitableitung $\dot{I}$ des Stromes I in der betreffenden Bestromungsleitung repräsentatives Spannungssignal S, das der Auswerteinrichtung 16 zugeführt wird. Über die Steuerleitung 17 empfangene, Umschaltungen durch die Schalteinrichtungen 9 bis 11 anzeigende Steuersignale erlauben die Bestimmung von S vor und nach einer Umschaltung und damit die Bestimmung eines für $\Delta\dot{I}$ repräsentativen Signals $\Delta S$. Aus den Signalen $\Delta S$ ermittelt die Auswerteinrichtung 16 z.B. anhand der oben angegebenen Gleichungen für die Position des Läufers repräsentative Signale.

Das vorangehend beschriebene Verfahren zur Positionsbestimmung ließe sich mit dem bekannten, auf Auswertung des Potentials $U_S$ am Sternpunkt beruhenden Verfahren kombinieren.

Die Primärwicklung 20 der in Fig. 2 gezeigten Messeinrichtung kann während der Umschaltvorgänge eine vorteilhafte Dämpfungswirkung zur Folge haben.

Aus den ermittelten Induktivitäten $L_1, L_2, L_3$ lässt sich ein Flussvektor bestimmen, dessen Richtung mit der Richtung des durch das Magnetfeld des Rotors erzeugten Rotorflussvektors $\Phi_R$ zusammenfällt und der dem Rotorflussvektor $\Phi_R$ proportional ist, solange die in den Phasensträngen fließenden Ströme $I_1, I_2, I_3$ den Gesamtflussvektor $\Phi$ nicht merklich beeinflussen. Letzteres kann insbesondere bei schwachem Rotorfeld und großem Luftspalt der Fall sein. Maßgebend für den Gesamtflussvektor $\Phi$, der eine Funktion von $L_1, L_2, L_3$ ist, sind dann neben dem Rotorflussvektor $\Phi_R$, der von den Strömen $I_1, I_2, I_3$ abhängige Statorflussvektor $\Phi_S$:

$$\Phi(L_1, L_2, L_3) = \Phi_R + \Phi_S(I_1, I_2, I_3) \qquad (15).$$

Bei bekannten Induktivitäten $L_1, L_2, L_3$ und bekannten Strömen $I_1, I_2, I_3$ lässt sich dann der Rotorflussvektor $\Phi_R$ berechnen:

$$\Phi_R = \Phi(L_1, L_2, L_3) - \Phi_S(I_1, I_2, I_3) \qquad\qquad (16).$$

Bei Kenntnis des Rotorflussvektors $\Phi_R$ ist dann auch die Drehposition des Rotors bekannt.

Die Ströme $I_1, I_2, I_3$ könnten gemessen werden. Sie lassen sich bei bekannten Induktivitäten $L_1, L_2, L_3$, bei (durch Messung der $\Delta \dot{I}_I$) bekannten Werten $\dot{I}_1, \dot{I}_2, \dot{I}_3$, bei bekannten Widerständen $R_1, R_2, R_3$ und bekannten induzierten Spannungen $U_{1\,ind}, U_{2\,ind}, U_{3\,ind}$ aber auch anhand oben angegebener Gleichungen berechnen.

Die Spannungen $U_{i\,ind}$ ergeben sich aus den Komponenten $\Phi_i$ des Gesamtflussvektors $\Phi$ multipliziert mit der ermittelten Drehgeschwindigkeit des Rotors.

## Patentansprüche

1. Verfahren zur Bestimmung der Position des Läufers einer mehrere Phasenstränge (1,2,3) aufweisenden elektrischen Maschine in Bezug auf den Stator, wobei die Induktivitäten ($L_1, L_2, L_3$) der Phasenstränge (1,2,3) von der jeweiligen Position des Läufers abhängen,
**dadurch gekennzeichnet,**
**dass** zumindest für einen der Bestromungseingänge (1',2',3') der elektrischen Maschine (4) eine Änderung ($\Delta \dot{I}i$) der Zeitableitung ($\dot{I}i$) des durch den betreffenden Bestromungseingang (i=1,2,3) fließenden Stromes (Ii) ermittelt wird, wobei die Änderung ($\Delta \dot{I}i$) der Zeitableitung ($\dot{I}_i$) durch einen Wechsel des Schaltzustands einer Beschaltung der Bestromungseingänge (1',2',3') mit einer Gleichspannung ($U_B$) und/oder einem Spannungsnullpunkt verursacht ist, und dass aus mehreren, nacheinander für den zumindest einen Bestromungseingang (i=1,2,3) oder gleichzeitig für mehrere der Bestromungseingänge (1',2',3') ermittelten Änderungen ($\Delta \dot{I}_i$) ein für die Position des Läufers repräsentatives Signal anhand die Summen der Spannungskomponenten über den einzelnen Phasensträngen (1,2,3) vor und nach dem Schaltzustandswechsel enthaltenden Gleichungen (2-14) ermittelt wird, wobei die Gleichungen (2-14) die positionsabhängigen Induktivitäten (L1, L2, L3) der Phasenstränge (1, 2, 3) und die den jeweiligen Schaltzuständen entsprechenden Änderungen der Zeitableitungen ($\Delta \dot{I}i$) definieren.

2. Verfahren nach Anspruch 1,
**dadurch gekennzeichnet,**
**dass** als repräsentatives Signal die momentane Induktivität ($L_1, L_2, L_3$) einer oder mehrerer der Phasenstränge (1,2,3) oder/und ein Quotient aus diesen Induktivitäten bestimmt wird.

3. Verfahren nach Anspruch 1 oder 2,
**dadurch gekennzeichnet,**
**dass** die Phasenstränge (1,2,3;1a,2a,3a) im Stern oder/und im Dreieck verschaltet sind.

4. Verfahren nach einem der Ansprüche 1 bis 3,
**dadurch gekennzeichnet,**
**dass** der Wechsel des Schaltzustandes im Rahmen einer Bestromung der elektrischen Maschine (4) durch Pulsweitenmodulation (PWM) erfolgt.

5. Verfahren nach einem der Ansprüche 1 bis 4,
**dadurch gekennzeichnet,**
**dass** die Änderung ($\Delta \dot{I}_i$) mit Hilfe eines Messtransformators (18), der ein ggf. zu verstärkendes Spannungssignal liefert, ermittelt wird.

6. Verfahren nach einem der Ansprüche 1 bis 5,
**dadurch gekennzeichnet,**
**dass** aus den momentanen Induktivitäten ($L_1, L_2, L_3$) der momentane Gesamtflussvektor ($\Phi$) und aus den momentanen, durch die Bestromungseingänge fließenden Strömen ($I_1, I_2, I_3$) der durch diese Ströme erzeugte Vektoranteil ($\Phi_S$) am Gesamtfluss ($\Phi$) und durch Substraktion dieses Vektoranteils ($\Phi_S$) von dem Gesamtfluss ($\Phi$) der Rotorflussvektor ($\Phi_R$) ermittelt wird.

7. Verfahren nach Anspruch 6,
**dadurch gekennzeichnet, dass** die momentanen Ströme ($I_1, I_2, I_3$) aus den Induktivitäten ($L_1, L_2, L_3$), den Widerständen ($R_1, R_2, R_3$) der Phasenstränge, den in den Phasensträngen induzierten Spannungen ($U_{1\,ind}, U_{2\,ind}, U_{3\,ind}$) und aus gemessenen Zeitableitungen ($\dot{I}_1, \dot{I}_2, \dot{I}_3$) der Ströme ($I_1, I_2, I_3$) berechnet werden und dass ggf. die Spannungen

($U_{1\,ind}$, $U_{2\,ind}$, $U_{3\,ind}$) aus den Komponenten ($\Phi_i$) des Gesamtflussvektors ($\Phi$) multipliziert mit der gemessenen Drehgeschwindigkeit des Rotors ermittelt werden.

**Claims**

1. Method for determining the position of the rotor of an electrical machine having a plurality of winding phases (1, 2, 3) with respect to the stator, wherein the inductances ($L_1$, $L_2$, $L_3$) of the winding phases (1, 2, 3) depend on the respective position of the rotor,
**characterized**
**in that**, at least for one of the current application inputs (1', 2', 3') of the electrical machine (4), a change ($\Delta \dot{I}_i$) in the time derivative ($\dot{I}_i$) of the current ($I_i$) flowing through the current application input (i = 1, 2, 3) in question is ascertained, wherein the change ($\Delta \dot{I}_i$) in the time derivative ($\dot{I}_i$) is caused by a change in the switching state of a connection of the current application inputs (1', 2', 3') to a DC voltage ($U_B$) and/or a voltage zero point,
and **in that** a signal which is representative of the position of the rotor is ascertained from the plurality of changes ($\Delta \dot{I}_i$), which are ascertained successively for the at least one current application input (i = 1, 2, 3) or simultaneously for a plurality of the current application inputs (1', 2', 3'), on the basis of equations (2-14) which contain the sums of the voltage components across the individual winding phases (1, 2, 3) before and after the change in switching state, wherein the equations (2-14) define the position-dependent inductances (L1, L2, L3) of the winding phases (1, 2, 3) and the changes in the time derivatives ($\Delta \dot{I}_i$) which correspond to the respective switching states.

2. Method according to Claim 1,
**characterized**
**in that** the instantaneous inductance ($L_1$, $L_2$, $L_3$) of one or more of the winding phases (1, 2, 3) or/and a quotient of these inductances is/are determined as the representative signal.

3. Method according to Claim 1 or 2,
**characterized**
**in that** the winding phases (1, 2, 3; 1a, 2a, 3a) are connected in star or/and in delta.

4. Method according to one of Claims 1 to 3,
**characterized**
**in that** the change in the switching state takes place as part of an application of current to the electrical machine (4) by pulse-width modulation (PWM).

5. Method according to one of Claims 1 to 4,
**characterized**
**in that** the change ($\Delta \dot{I}_i$) is ascertained with the aid of a measurement transformer (18) which supplies a voltage signal which is optionally to be amplified.

6. Method according to one of Claims 1 to 5,
**characterized**
**in that** the instantaneous total flux vector ($\Phi$) is ascertained from the instantaneous inductances ($L_1$, $L_2$, $L_3$), and that vector component ($\Phi_S$) of the total flux ($\Phi$) which is produced by the instantaneous currents ($I_1$, $I_2$, $I_3$) flowing through the current application inputs is ascertained from these currents, and the rotor flux vector ($\Phi_R$) is ascertained by subtracting this vector component ($\Phi_S$) from the total flux ($\Phi$).

7. Method according to Claim 6,
**characterized**
**in that** the instantaneous currents ($I_1$, $I_2$, $I_3$) are calculated from the inductances ($L_1$, $L_2$, $L_3$), the resistances (Ri, $R_2$, $R_3$) of the winding phases, the voltages ($U_{1\,ind}$, $U_{2\,ind}$, $U_{3\,ind}$) which are induced in the winding phases and from the measured time derivatives ($\dot{I}_1$, $\dot{I}_2$, $\dot{I}_3$) of the currents ($I_1$, $I_2$, $I_3$), and in that the voltages ($U_{1\,ind}$, $U_{2\,ind}$, $U_{3\,ind}$) may be ascertained from the components ($\Phi_i$) of the total flux vector ($\Phi$) multiplied by the measured rotation speed of the rotor.

**Revendications**

1. Procédé pour déterminer la position du rotor d'une machine électrique présentant plusieurs conducteurs de phase (1, 2, 3) par rapport au stator, dans lequel les inductances ($L_1$, $L_2$, $L_3$) des conducteurs de phase (1, 2, 3) dépendent de la position respective du rotor, **caractérisé en ce que** pour l'une au moins des entrées d'alimentation (1', 2', 3') de la machine électrique (4), on détermine une modification ($\Delta \dot{I}_i$) de la dérivée de temps ($\dot{I}_i$) du courant ($I_i$) circulant à travers l'entrée d'alimentation correspondante (i = 1, 2, 3), la modification ($\Delta \dot{I}_i$) de la dérivée de temps ($\dot{I}_i$) est causée par un changement de l'état de commutation d'un branchement des entrées d'alimentation (1', 2', 3') à une tension continue ($U_B$) et/ou à un point de tension zéro, et **en ce que** à partir de plusieurs modifications ($\Delta \dot{I}_i$) déterminées successivement pour ladite au moins une entrée d'alimentation (i = 1, 2, 3) ou simultanément pour plusieurs des entrées d'alimentation (1', 2', 3'), on détermine un signal représentatif de la position du rotor en se basant sur les équations (2 - 14) contenant les sommes des composantes de tension via les conducteurs de phase individuels (1, 2, 3) avant et après le changement d'état de commutation, et les équations (2 - 14) définissent les inductances (L1, L2, L3) dépendantes de la position des conducteurs de phase (1, 2, 3) et les modifications des dérivées de temps ($\dot{I}_i$) correspondantes aux états de commutation respectifs.

2. Procédé selon la revendication 1, **caractérisé en ce que** on détermine à titre de signal représentatif l'inductance momentanée ($L_1$, $L_2$, $L_3$) d'un ou de plusieurs des conducteurs de phase (1, 2, 3) et/ou un quotient de ces inductances.

3. Procédé selon la revendication 1 ou 2, **caractérisé en ce que** les conducteurs de phase (1, 2, 3 ; 1a, 2a, 3a) sont branchés en étoile et/ou en triangle.

4. Procédé selon l'une des revendications 1 à 3, **caractérisé en ce que** le changement de l'état de commutation s'effectue dans le cadre d'une alimentation d'une machine électrique (4) par modulation de largeur d'impulsion (PWM).

5. Procédé selon l'une des revendications 1 à 4, **caractérisé en ce que** la modification ($\Delta \dot{I}_i$) est déterminée à l'aide d'un transformateur de mesure (18) qui fournit un signal de tension le cas échéant à amplifier.

6. Procédé selon l'une des revendications 1 à 5, **caractérisé en ce que** à partir des inductances momentanées ($L_1$, $L_2$, $L_3$) on détermine le vecteur de flux global momentané ($\phi$), et à partir des courants momentanés ($I_1$, $I_2$, $I_3$) circulant à travers les entrées d'alimentation, on détermine la part de vecteur ($\phi_S$) générée par ces courants dans le courant global ($\phi$), et par soustraction de cette part de vecteur ($\phi_S$) du courant global ($\phi$), on détermine le vecteur de courant de rotor ($\phi_R$)

7. Procédé selon la revendication 6, **caractérisé en ce que** on calcule les courants momentanés ($I_1$, $I_2$, $I_3$) à partir des inductances ($L_1$, $L_2$, $L_3$), des résistances ($R_1$, $R_2$, $R_3$) des conducteurs de phase, des tensions ($U_{1\,ind}$, $U_{2\,ind}$, $U_{3\,ind}$) induites dans les conducteurs de phase, et à partir des dérivées de temps mesurées ($\dot{I}_1$, $\dot{I}_2$, $\dot{I}_3$) des courants ($I_1$, $I_2$, $I_3$), et **en ce que** le cas échéant, on détermine les tensions ($U_{1\,ind}$, $U_{2\,ind}$, $U_{3\,ind}$) à partir des composantes ($\phi_i$) du vecteur de courant global ($\phi$), multiplié par la vitesse de rotation mesurée du rotor.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1005716 B1
- WO 2010000640 A1

- EP 1901401 A1